# EUROPÄISCHE PATENTANMELDUNG

(11) **EP 4 628 335 A1**
(43) Veröffentlichungstag der Anmeldung: **08.10.2025**
(21) Anmeldenummer: 25162770.9
(22) Anmeldetag: 10.03.2025
(51) Int. Cl.: B60K 1/00, B60K 11/02

(54) **SYSTEM UND VERFAHREN ZUR TEMPERIERUNG EINER ELEKTRISCHEN TRAKTIONSBATTERIE**

(30) Priorität: 03.04.2024 DE 102024203037
(71) Anmelder: VOLKSWAGEN AG, 38440 Wolfsburg (DE)
(72) Erfinder: Richter, Matthias, 38440 Wolfsburg (DE)

(57) **Zusammenfassung**

Die Erfindung betrifft ein System und ein Verfahren zur Temperierung einer elektrischen Traktionsbatterie eines Kraftfahrzeugs mit einem Kühlmittelkreislauf, der zur Führung eines Kühlmittels ausgebildet ist, umfassend eine erste Kühlmittelpumpe, eine erste Wärmequelle, ein Thermostatventil mit einem ersten Durchflussweg, der in einen ersten Kühler mündet, und einem zweiten Durchflussweg, der in Bezug auf den ersten Kühler in eine erste Bypassleitung mündet, wobei das Thermostatventil mittels eines Dehnstoffelementes einen temperaturabhängigen Öffnungsquerschnitt aufweist, der bis zu einer ersten Öffnungstemperatur den ersten Durchflussweg vollständig schließt und ab einer zweiten Öffnungstemperatur den ersten Durchflussweg vollständig öffnet. Erfindungsgemäß ist Thermostatventil als Kennfeldthermostat ausgebildet, wobei das Dehnstoffelement des Kennfeldthermostats mittels eines Heizelements erwärmbar ist, sodass der Öffnungsquerschnitt des Kennfeldthermostats vergrößerbar ist, wenn die Temperatur des Kühlmittels am Kennfeldthermostat kleiner als die zweite Öffnungstemperatur ist. Ferner wird zum Kühlen der Traktionsbatterie erfindungsgemäß das Dehnstoffelement des Kennfeldthermostats mittels des Heizelementes erwärmt, sodass der Öffnungsquerschnitt des Kennfeldthermostats vergrößert wird und das Kühlmittel über den ersten Durchflussweg und den ersten Kühler zur Traktionsbatterie geleitet wird.

## Beschreibung

Die Erfindung betrifft ein System zur Temperierung einer elektrischen Traktionsbatterie eines Kraftfahrzeugs mit einem Kühlmittelkreislauf, der zur Führung eines Kühlmittels ausgebildet ist, umfassend eine erste Kühlmittelpumpe, eine erste Wärmequelle, ein Thermostatventil mit einem ersten Durchflussweg, der in einen ersten Kühler mündet, und einem zweiten Durchflussweg, der in Bezug auf den ersten Kühler in eine erste Bypassleitung mündet, wobei das Thermostatventil mittels eines Dehnstoffelementes einen temperaturabhängigen Öffnungsquerschnitt aufweist, der bis zu einer ersten Öffnungstemperatur den ersten Durchflussweg vollständig schließt und ab einer zweiten Öffnungstemperatur den ersten Durchflussweg vollständig öffnet.

Die Erfindung betrifft ferner ein Verfahren zur Temperierung einer elektrischen Traktionsbatterie eines Kraftfahrzeugs mittels eines solchen Systems.

Das Kühlsystem eines elektrischen Kraftfahrzeugs unterscheidet sich, unabhängig davon, ob das Kraftfahrzeug als Hybridfahrzeug oder als reines Elektrofahrzeug ausgebildet ist, in erheblichem Maße von einem Kühlsystem eines Kraftfahrzeugs, das ausschließlich mittels eines Verbrennungsmotors angetrieben ist. Das ist darauf zurückzuführen, dass bei einem elektrischen Kraftfahrzeug unterschiedliche Komponenten des elektrischen Traktionssystems, insbesondere der elektrische Traktionsmotor und eine Traktionsbatterie, gekühlt werden müssen. Ferner müssen für diese Komponenten des elektrischen Traktionssystems häufig unterschiedliche Temperaturniveaus mittels des Kühlsystems eingehalten werden. Beispielsweise kann es erforderlich sein, dass ein vorgesehener Betriebstemperaturbereich für die Traktionsbatterie deutlich unterhalb des vorgesehenen Betriebstemperaturbereichs für den elektrischen Traktionsmotor liegt, was dazu führen kann, dass diese Komponenten durch separate Kühlmittelströmungen mit unterschiedlichen Kühlmitteltemperaturen zu kühlen sind.

Darüber hinaus ist die Traktionsbatterie in Abhängigkeit der gegebenen Rahmenbedingungen zu temperieren, was sowohl das Kühlen als auch das Heizen der Traktionsbatterie beinhalten kann.

Zum Temperieren einer Traktionsbatterie sind ein gattungsgemäßes System und ein gattungsgemäßes Verfahren beispielsweise aus der DE 10 2009 021 530 A1 bekannt. Auch in den US 7,147,071 B2, CN 110165327 B und EP 2599651 A1 sind vergleichbare Systeme und Verfahren beschrieben.

Die Thermostatventile, die mitunter bei den nach dem Stand der Technik bekannten Systemen und Verfahren eingesetzt werden, besitzen eine eineindeutige Zuordnung zwischen der Temperatur des zufließenden Kühlmittels und des daraus resultierenden Öffnungsquerschnitts. Dabei sind die Thermostatventile üblicherweise so ausgelegt, dass sich der Öffnungsquerschnitt in einem Temperaturfenster von 15 °C bis 25 °C vollständig öffnet, sodass das Kühlmittel vollständig durch den ersten Kühler geführt wird. Die Abwärme aus einer in Strömungsrichtung des Kühlmittels vorgelagerten Wärmequelle kann daher nicht mehr an die Traktionsbatterie abgegeben werden, weil die Wärme an die Umgebung abgeführt wird. Zum Heizen der Traktionsbatterie ist daher ein separater Heizer vorzuhalten, der üblicherweise in einem separaten Kühlmittelteilkreislauf eingebunden ist.

Hiervon ausgehend ist es die Aufgabe der vorliegenden Erfindung, die nach dem Stand der Technik bekannten Verfahren und Systeme zum Temperieren einer Traktionsbatterie derart weiterzubilden, dass die Traktionsbatterie mit einfachen und kostenschonende Mitteln temperiert, insbesondere gekühlt und geheizt werden kann.

Diese Aufgabe wird durch das System nach Anspruch 1 und das Verfahren nach Anspruch 9 gelöst. Nach dem erfindungsgemäßen System ist vorgesehen, dass das Thermostatventil als Kennfeldthermostat ausgebildet ist, wobei das Dehnstoffelement des Kennfeldthermostats mittels eines Heizelementes erwärmbar ist, sodass der Öffnungsquerschnitt des Kennfeldthermostats vergrößerbar ist, wenn die Temperatur des Kühlmittels am Kennfeldthermostat kleiner als die zweite Öffnungstemperatur ist. Nach dem erfindungsgemäßen Verfahren ist vorgesehen, dass zum Kühlen der Traktionsbatterie das Dehnstoffelement des Kennfeldthermostats mittels des Heizelementes erwärmt wird, sodass der Öffnungsquerschnitt des Kennfeldthermostats vergrößert wird und das Kühlmittel über den ersten Durchflussweg und den ersten Kühler zur Traktionsbatterie geleitet wird. Vorzugsweise wird zum Heizen der Traktionsbatterie die erste Wärmequelle zur Abgabe einer erhöhten Wärmemenge angesteuert, die über die erste Bypassleitung an die Traktionsbatterie abgegeben wird.

Ein Kennfeldthermostat im Rahmen der vorliegenden Anmeldung ist ein Thermostatventil mit einem beheizbaren Dehnstoffelement, so dass der Öffnungsquerschnitt des Kennfeldthermostats durch eine Beheizung des Dehnstoffelementes regelbar ist. Hierdurch wird zunächst bewirkt, dass sich der Öffnungsquerschnitt des Kennfeldthermostats auch bei Temperaturen des Kühlmittels unterhalb der zweiten Öffnungstemperatur öffnen lässt, sodass die Traktionsbatterie effektiv gekühlt werden kann. Ferner kann hierdurch ein Dehnstoffelement verbaut werden, das vergleichsweise größere erste und zweite Öffnungstemperaturen des Kennfeldthermostats erzeugt, sodass das Kühlmittel im unbeheizten Zustand des Kennfeldthermostats erst bei vergleichsweise höheren Temperaturen über den ersten Durchflussweg in den ersten Kühler geführt wird, sodass die über die Bypassleitung fließende Wärmemenge zum Heizen unmittelbar an die Traktionsbatterie abgegeben werden kann. Hierdurch kann ein ansonsten erforderlicher zusätzlicher Heizer in vorteilhafter Weise eingespart werden oder zumindest deutlich kleiner ausgebildet sein.

Bei alledem ist das Kennfeldthermostat derart ausgebildet, dass es bei Temperaturen unterhalb der ersten Öffnungstemperatur den ersten Durchflussweg vollständig schließt und den zweiten Durchflussweg vollständig öffnet. Bei Temperaturen oberhalb der zweiten Öffnungstemperatur ist indes der erste Durchflussweg vollständig geöffnet und der zweite Durchflussweg vollständig geschlossen. Bei Temperaturen zwischen der ersten und zweiten Öffnungstemperatur gibt es eine Übergangsphase in der beide Durchflusswege im leicht geöffnet sind.

Vorteilhafte Weiterbildungen der vorliegenden Erfindung werden nachfolgend und in den Unteransprüchen angegeben.

Vorzugsweise ist vorgesehen, dass zur Einstellung der Temperatur des Heizelementes eine Steuereinheit vorgesehen ist. Die Steuereinheit ist dabei mit unterschiedlichen Sensoren verbunden, die eine Überwachung der Prozesse innerhalb der elektrischen Antriebseinheit des Kraftfahrzeugs erlaubt. Mittels einer diesbezüglichen Auswerteeinheit, die in der Steuereinheit integriert ist, lassen sich die idealen Parameter zum Temperieren der Traktionsbatterie ermitteln, sodass die Steuereinheit das Heizelement anforderungsgemäß ansteuert.

Nach einer bevorzugten Ausgestaltung der Erfindung ist vorgesehen, dass das Dehnstoffelement derart ausgelegt ist, dass das Kennfeldthermostat im unbeheizten Zustand eine erste Öffnungstemperatur von 30 °C bis 50 °C, insbesondere von 40 °C, besitzt. Ferner ist vorzugsweise vorgesehen, dass das Dehnstoffelement derart ausgelegt ist, dass das Kennfeldthermostat im unbeheizten Zustand eine zweite Öffnungstemperatur von 40 °C bis 60 °C, insbesondere von 50 °C, besitzt. Dabei kann das Dehnstoffelement in vorteilhafter Weise als Wachsdehnelement ausgebildet sein.

Das Heizelement ist vorzugsweise derart ausgelegt, dass das Dehnstoffelement auf die erste Öffnungstemperatur beheizbar ist, wenn das Kühlmittel am Kennfeldthermostat eine Temperatur von mindestens 10 °C bis 20 °C, insbesondere von mindestens 15 °C, aufweist. Als Heizelement kann beispielsweise eine Widerstandsheizung verwendet werden. Die gewünschte Temperatur kann dabei stufenlos oder mittels diskreter Heizintervalle (an/aus) einstellbar sein.

Die erste Wärmequelle weist vorzugsweise eine elektrische Antriebseinheit (EM) und/oder einen Pulswechselrichter (PWR) und/oder ein Ladegerät / Wandler (OCDC) auf. Diese konkreten Wärmequellen erzeugen regelmäßig eine hinreichende Abwärme, mit der die Traktionsbatterie erforderlichenfalls beheizbar ist.

Dabei ist der erste Kühler vorzugsweise als Niedrigtemperaturkühler ausgebildet, der üblicherweise im Frontend von Kraftfahrzeugen auch für andere Zwecke montiert ist.

Im Kühlmittelkreislauf ist in Strömungsrichtung des Kühlmittels nach dem ersten Kühler und nach dem ersten Bypass ein erstes Schaltventil mit einem ersten Durchflussweg, der zur Traktionsbatterie führt, und einem zweiten Durchflussweg angeordnet, der in Bezug auf die Traktionsbatterie in eine zweite Bypassleitung mündet. Hierdurch kann der Kühlmittelstrom vollständig an der Traktionsbatterie vorbeigeleitet werden, wenn eine Temperierung der Traktionsbatterie nicht erforderlich ist oder das Kühlwasser nicht die ideale Temperatur aufweist.

Konkrete Ausführungsformen der vorliegenden Erfindung werden nachfolgend Bezug auf die Figuren erläutert. Es zeigen:

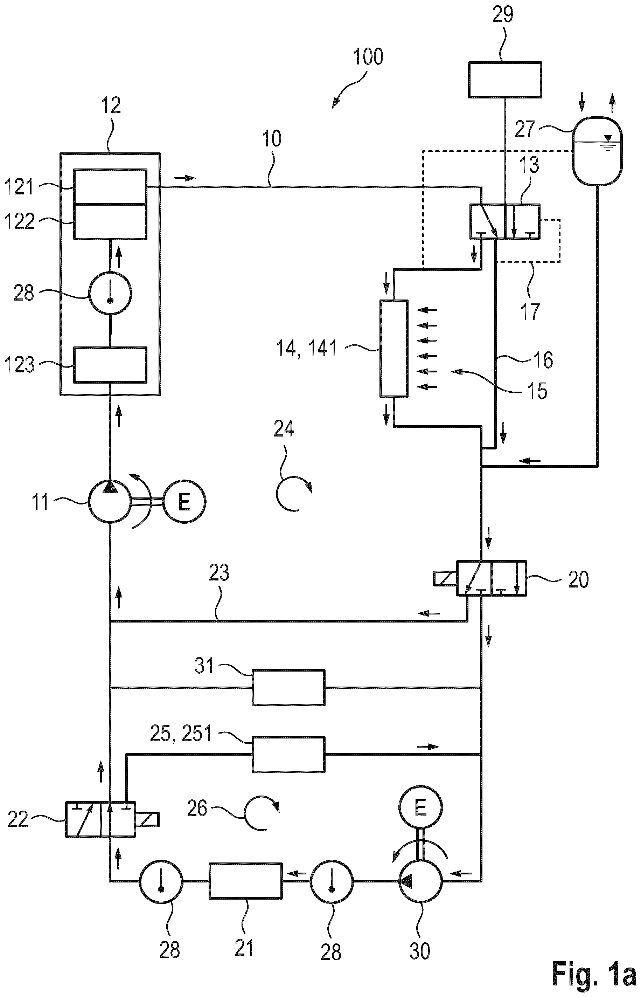

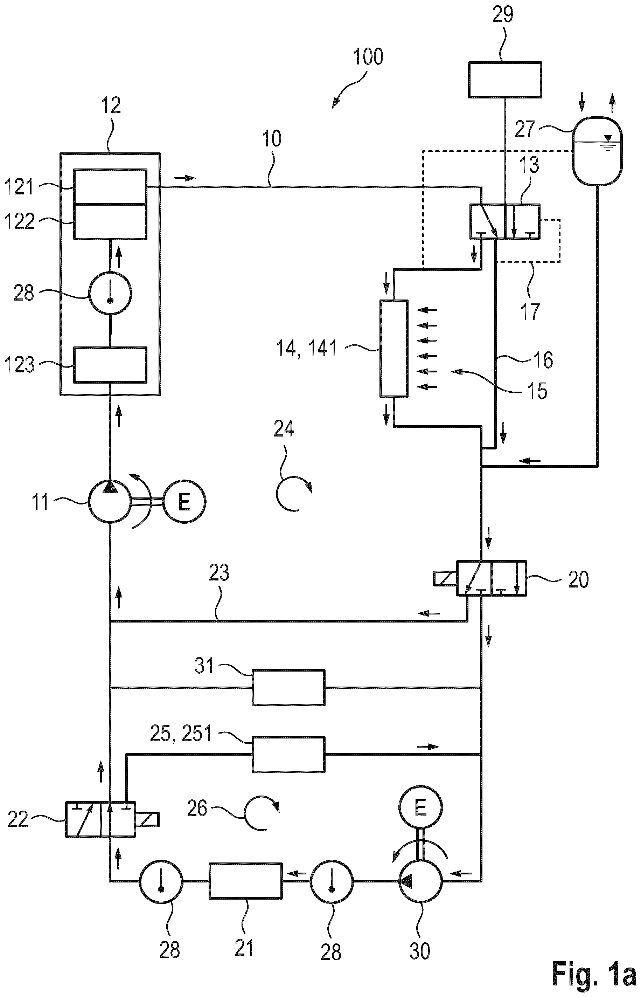

- Fig. 1a: ein System zum Temperieren einer Traktionsbatterie,
- Fig. 1b: eine perspektivische teilgeschnittene Ansicht eines Kennfeldthermostats,
- Fig. 2: ein Ablaufdiagramm eines Verfahrens zum Temperieren einer Traktionsbatterie und
- Fig. 3: ein Diagramm.

Das System 100 besitzt einen Kühlmittelkreislauf 10 mit mehreren (nicht im einzelnen bezifferten) Kühlmittelleitungen. Von einer ersten Kühlmittelpumpe 11 ausgehend wird das Kühlmittel zu einer ersten Wärmequelle 12 geführt, wo das Kühlmittel Wärme aufnimmt. Im gezeigten Ausführungsbeispiel weist die erste Wärmequelle 12 eine elektrische Antriebseinheit 121, einen Pulswechselrichter 122 und ein Ladegerät / Wandler 123 auf. Das Kühlmittel gelangt im Anschluss hieran an ein Thermostatventil 13, das als Kennfeldthermostat 131 ausgebildet ist und einen ersten Durchflussweg und einen zweiten Durchflussweg besitzt. Der erste Durchflussweg mündet in einen ersten Kühler 14, der im gezeigten Ausführungsbeispiel als Niedrigtemperaturkühler 141 ausgebildet ist und Wärme über den Fahrtwind 15 an die Umgebung abgibt. Der zweite Durchflussweg mündet in Bezug auf den ersten Kühler 14 in eine erste Bypassleitung 16, wobei die erste Bypassleitung 16 über eine Steuerleitung 17 mit dem Kennfeldthermostat 131 verbunden ist. Das Kennfeldthermostat 131 besitzt ein Dehnstoffelement 18 und weist daher einen temperaturabhängigen Öffnungsquerschnitt auf. Bis zu einer ersten Öffnungstemperatur ist der erste Durchflussweg vollständig geschlossen, sodass das Kühlmittel ausschließlich über die erste Bypassleitung 16 fließt. Erst beim Überschreiten der ersten Öffnungstemperatur öffnet sich der Öffnungsquerschnitt, bis er mit dem Erreichen einer zweiten Öffnungstemperatur vollständig geöffnet ist. Das Kennfeldthermostat 131 besitzt ein Heizelement 19, mit dem das Dehnstoffelement 18 erwärmbar ist, sodass der Öffnungsquerschnitt des Kennfeldthermostats 131 auch dann vergrößerbar ist, wenn die Temperatur des Kühlmittels an dem Kennfeldthermostat 131 kleiner als die zweite Öffnungstemperatur ist. Im gezeigten Ausführungsbeispiel ist das Dehnstoffelement 18 derart ausgelegt, dass das Kennfeldthermostat 131 im unbeheizten Zustand eine erste Öffnungstemperatur von 40 °C und eine zweite Öffnungstemperatur von 50 °C besitzt. Das Heizelement 19 ist dabei so ausgelegt, dass das Dehnstoffelement 18 auf die erste Öffnungstemperatur beheizbar ist, wenn das Kühlmittel am Kennfeldthermostat 131 eine Temperatur von mindestens 15 °C aufweist.

Im weiteren Verlauf des Kühlmittelkreislaufs 10 ist ein erstes Schaltventil 20 mit einem ersten Durchflussweg und einem zweiten Durchflussweg angeordnet. Der erste Durchflussweg führt zu der Traktionsbatterie 21, wo Wärme bedarfsabhängig abgegeben oder aufgenommen werden kann. Nach der Traktionsbatterie 21 ist ein zweites Schaltventil 22 angeordnet, das ebenfalls einen ersten Durchflussweg und einen zweiten Durchflussweg besitzt. Der erste Durchflussweg des zweiten Schaltventils 22 führt zur ersten Kühlmittelpumpe 11, wo der Kühlmittelkreislauf in einer entsprechenden Einstellung des ersten und zweiten Schaltventils 20, 22 geschlossen ist. Der zweite Durchflussweg des ersten Schaltventils 20 mündet in Bezug auf die Traktionsbatterie 21 in eine zweite Bypassleitung 23, wodurch ein erster Kühlmittelteilkreislauf 24 schließbar ist, sofern die Traktionsbatterie 21 vom übrigen Kühlmittelkreislauf 10 zu trennen ist. Der zweite Durchflussweg des zweiten Schaltventils 22 führt zu einer zweiten Wärmequelle 25 in Form eines Heizers 251, der mit der Zuflussleitung der Traktionsbatterie 21 verbunden ist. Hierdurch schließt sich ein zweiter Kühlmittelteilkreislauf 26, der zum separaten Heizen der Traktionsbatterie 21 ausgebildet ist. Zur Aufrechterhaltung der Kühlmittelströmung innerhalb des Kühlmittelteilkreislaufs 26 ist eine zweite Kühlmittelpumpe 30 vorgesehen. Durch die beschriebene Ausführung des Kennfeldthermostats 131 kann die zweite Wärmequelle 25 im Vergleich zum Stand der Technik deutlich kleiner ausgebildet sein oder vollständig entfallen. Darüber hinaus ist innerhalb einer Bypassleitung zur Traktionsbatterie 21 ein Chiller 31 angeordnet. Der Chiller 31 hat die Aufgabe, die Traktionsbatterie 21 über den Kältemittelkreislauf zu kühlen, sofern die Kühlleistung, die über den Kühler 14 bereitgestellt werden kann, alleine nicht ausreicht, um die Traktionsbatterie 21 zu kühlen

Zum Entlüften des Kühlmittelkreislaufs 10 und zur Speicherung von zusätzlichem Kühlmittel ist der Kühlmittelkreislauf 10 mit einem Ausgleichsbehälter 27 verbunden.

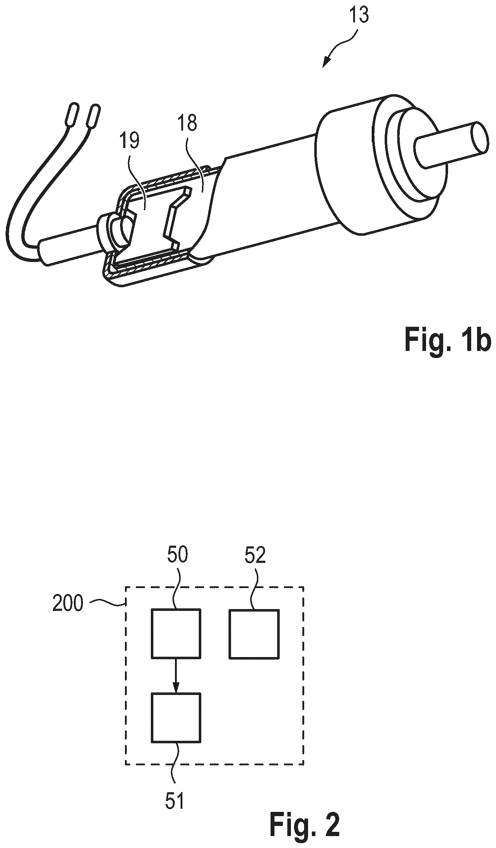

Zur Steuerung des Systems 100 sind mehrere Temperatursensoren 28 und eine Steuereinheit 29 vorgesehen. Dort wird das Verfahren 200 zur Temperierung der Traktionsbatterie 21 gesteuert (Fig. 2), insbesondere das Erwärmen 50 des Dehnstoffelementes 18 des Kennfeldthermostats 131 mittels des Heizelementes 19, das Vergrößern 51 des Öffnungsquerschnitts des Kennfeldthermostats 131 zum Kühlen der Traktionsbatterie 21 und das Ansteuern der ersten Wärmequelle 12 zum Abgeben einer erhöhten Wärmemenge zum Heizen der Traktionsbatterie 21.

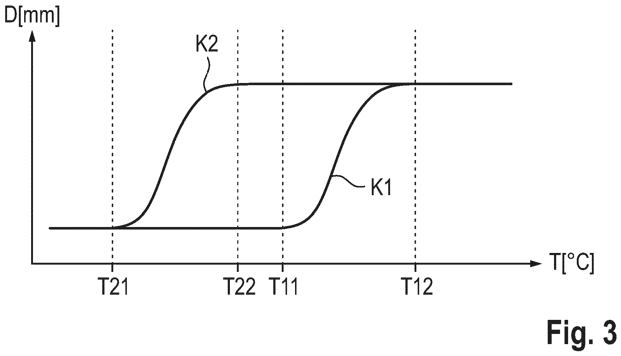

Fig. 3 zeigt ein Diagramm, bei dem der Öffnungsquerschnitt D des Kennfeldthermostats 131 in Abhängigkeit der Temperatur T des Kühlmittels aufgetragen ist. Im unbeheizten Zustand des Kennfeldthermostats ergibt sich eine Kennlinie K₁ mit einer ersten Öffnungstemperatur T₁₁ von 40 °C und einer zweiten Öffnungstemperatur T₁₂ von 50 °C. Durch die Beheizbarkeit des Kennfeldthermostats 131 ergibt sich eine zweite Kennlinie K₂ mit einer deutlich geringeren ersten Öffnungstemperatur T₂₁ von 15 °C und einer deutlich geringeren zweiten Öffnungstemperatur _{T22} von 25 °C. Die Beheizbarkeit des Dehnstoffelementes 18 bewirkt, dass alle Wertepaare aus Temperatur und Öffnungsquerschnitt innerhalb der Einhüllenden aus K₁ und K₂ einstellbar sind, sodass die Temperierung der Traktionsbatterie 21 bedarfsabhängig erfolgt.

### Bezugszeichenliste

- 100: System
- 200: Verfahren
- 10: Kühlmittelkreislauf
- 11: Kühlmittelpumpe
- 12: erste Wärmequelle
- 121: elektrische Antriebseinheit
- 122: Pulswechselrichter
- 123: Ladegerät/Wandler
- 13: Thermostatventil
- 131: Kennfeldthermostat
- 14: erster Kühler
- 141: Niedrigtemperaturkühler
- 15: Fahrtwind
- 16: erste Bypassleitung
- 17: Steuerleitung
- 18: Dehnstoffelement
- 19: Heizelement
- 20: erstes Schaltventil
- 21: Traktionsbatterie
- 22: zweites Schaltventil
- 23: zweite Bypassleitung
- 24: erster Kühlmittelteilkreislauf
- 25: zweite Wärmequelle
- 251: Heizer
- 26: zweiter Kühlmittelteilkreislauf
- 27: Ausgleichs Behälter
- 28: Temperatursensor
- 29: Steuereinheit
- 30: zweite Kühlmittelpumpe
- 31: Chiller
- 50: Erwärmen
- 51: Vergrößern
- 52: Ansteuern

## Patentansprüche

1. System (100) zur Temperierung einer elektrischen Traktionsbatterie (21) eines Kraftfahrzeugs mit einem Kühlmittelkreislauf (10), der zur Führung eines Kühlmittels ausgebildet ist, umfassend eine erste Kühlmittelpumpe (11), eine erste Wärmequelle (12), ein Thermostatventil (13) mit einem ersten Durchflussweg, der in einen ersten Kühler (14) mündet, und einem zweiten Durchflussweg, der in Bezug auf den ersten Kühler (14) in eine erste Bypassleitung (16) mündet, wobei das Thermostatventil (13) mittels eines Dehnstoffelementes (18) einen temperaturabhängigen Öffnungsquerschnitt aufweist, der bis zu einer ersten Öffnungstemperatur den ersten Durchflussweg vollständig schließt und ab einer zweiten Öffnungstemperatur den ersten Durchflussweg vollständig öffnet, **dadurch gekennzeichnet, dass** das Thermostatventil (13) als Kennfeldthermostat (131) ausgebildet ist, wobei das Dehnstoffelement (18) des Kennfeldthermostats (131) mittels eines Heizelementes (19) erwärmbar ist, sodass der Öffnungsquerschnitt des Kennfeldthermostats (131) vergrößerbar ist, wenn die Temperatur des Kühlmittels am Kennfeldthermostat (131) kleiner als die zweite Öffnungstemperatur ist.

2. System (100) nach Anspruch 1, **dadurch gekennzeichnet, dass** zur Einstellung der Temperatur des Heizelementes (19) eine Steuereinheit (29) vorgesehen ist.

3. System (100) nach einem der Ansprüche 1 oder 2, **dadurch gekennzeichnet, dass** das Dehnstoffelement (18) derart ausgelegt ist, dass das Kennfeldthermostat (131) im unbeheizten Zustand eine erste Öffnungstemperatur von 30 °C bis 50 °C, insbesondere von 40 °C, besitzt.

4. System (100) nach einem der Ansprüche 1 bis 3, **dadurch gekennzeichnet, dass** das Dehnstoffelement (18) derart ausgelegt ist, dass das Kennfeldthermostat (131) im unbeheizten Zustand eine zweite Öffnungstemperatur von 40 °C bis 60 °C, insbesondere von 50 °C, besitzt.

5. System (100) nach einem der Ansprüche 1 bis 4, **dadurch gekennzeichnet, dass** das Heizelement (19) derart ausgelegt ist, dass das Dehnstoffelement (18) auf die erste Öffnungstemperatur beheizbar ist, wenn das Kühlmittel am Kennfeldthermostat (131) eine Temperatur von mindestens 10 °C bis 20 °C, insbesondere von mindestens 15 °C, aufweist.

6. System (100) nach einem der Ansprüche 1 bis 5, **dadurch gekennzeichnet, dass** die erste Wärmequelle (12) eine elektrische Antriebseinheit (121) und/oder einen Pulswechselrichter (122) und/oder ein Ladegerät / Wandler (123) aufweist.

7. System (100) nach einem der Ansprüche 1 bis 6, **dadurch gekennzeichnet, dass** der erste Kühler (14) als Niedrigtemperaturkühler (141) ausgebildet ist.

8. System (100) nach einem der Ansprüche 1 bis 7, **gekennzeichnet durch** ein erstes Schaltventil (20) mit einem ersten Durchflussweg, der zur Traktionsbatterie (21) führt, und einem zweiten Durchflussweg, der in Bezug auf die Traktionsbatterie (21) in eine zweite Bypassleitung (23) mündet.

9. Verfahren (200) zur Temperierung einer elektrischen Traktionsbatterie (21) eines Kraftfahrzeugs mittels eines Systems (100) nach einem der Ansprüche 1 bis 8, **dadurch gekennzeichnet, dass** zum Kühlen der Traktionsbatterie (21) das Dehnstoffelement (18) des Kennfeldthermostats (131) mittels des Heizelementes (19) erwärmt wird, sodass der Öffnungsquerschnitt des Kennfeldthermostats (131) vergrößert wird und das Kühlmittel über den ersten Durchflussweg und den ersten Kühler (14) zur Traktionsbatterie (21) geleitet wird.

10. Verfahren (200) nach Anspruch 9, **dadurch gekennzeichnet, dass** zum Heizen der Traktionsbatterie (21) die erste Wärmequelle (12) zur Abgabe einer erhöhten Wärmemenge angesteuert wird, die über die erste Bypassleitung (16) an die Traktionsbatterie (21) abgegeben wird.
